# EUROPEAN PATENT SPECIFICATION

(11) **EP 3 369 590 B1**
(45) Date of publication and mention of the grant of the patent: **23.12.2020**
(21) Application number: 16859997.5
(22) Date of filing: 28.10.2016
(51) Int. Cl.: B60C 11/03

(54) **PNEUMATIC TIRE FOR MOTORCYCLES**
LUFTREIFEN FÜR MOTORRÄDER
PNEU POUR MOTOCYCLETTES

(30) Priority: 29.10.2015 JP 2015212746; 17.11.2015 JP 2015225219; 17.11.2015 JP 2015225221; 17.11.2015 JP 2015225223
(43) Date of publication of application: 05.09.2018
(73) Proprietor: Bridgestone Corporation, Tokyo 104-8340 (JP)
(72) Inventor: TOKITOH Yasufumi, Tokyo 104-8340 (JP); TAKAHASHI Junichi, Tokyo 104-8340 (JP); ITOI, Dyta, Tokyo 104-8340 (JP); NAKAMURA Takamitsu, Tokyo 104-8340 (JP)
(74) Representative: Oxley, Robin John George
(86) International application number: PCT/JP2016/082170
(87) International publication number: WO 2017/073769

(56) References cited:
- EP-A1- 2 626 220
- EP-A1- 3 050 721
- WO-A1-2009/153822
- JP-A- 2009 220 781
- JP-A- 2013 180 664
- JP-A- 2013 519 560
- JP-A- 2014 131 899

## Description

### TECHNICAL FIELD

The present invention relates to a pneumatic tire for motorcycles (hereinafter also simply referred to as "tire"), and more particularly to a pneumatic tire for motorcycles which can exhibit a performance of a new tire at an early period and enables visual confirmation that the tire as new is worn to such an extent as to be capable of sufficiently exhibiting its performance.

### BACKGROUND ART

Typically, a vulcanization process at a manufacturing process of a pneumatic tire is performed by disposing a bladder for tire vulcanization in the interior of the unvulcanized tire which is provided in a mold, and allowing this bladder for tire vulcanization to expand by the steam so as to adhere the unvulcanized tire to the mold. The tire as vulcanized is taken out from a vulcanization device, while, however, the vulcanized tire is then required to be smoothly released from the vulcanization device.

In view of such problems, hitherto, it has been performed that onto an upper mold portion of the vulcanization device, a mold release agent of, for example, a silicon base is sprayed in advance, thereby preventing adhesion of the vulcanized tire. Besides, for example, in Patent Document 1, there has been made a design in which remodeling to provide a release jig without using a mold release agent is performed to release a tightly adhered vulcanized tire.

### RELATED ART DOCUMENT

### PATENT DOCUMENT

Patent Document 1: Japanese Unexamined Patent Application Publication No. H06-21873.

Documents WO 2009/153822 A1 and EP 2 626 220 A1 disclose pneumatic tires for motorcycles with the tread portion comprising grooves extending in the width direction. Document EP 3 050 721 A1 is an Art. 54 (3) EPC application disclosing a tread of a pneumatic tires for motorcycle comprising narrow oblique grooves.

### SUMMARY OF THE INVENTION

### PROBLEMS TO BE SOLVED BY THE INVENTION

A tire which is manufactured using a mold release agent during vulcanization of the unvulcanized tire fails to sufficiently exhibit its original performance when used as a brand new product because silicon and the like which is a component of the mold release agent migrates to a tread portion. Accordingly, in order to allow the performance of a new tire to be sufficiently exhibited, the tread portion is made to be worn to a certain extent so as to remove silicon and the like having migrated to the tread portion.

Thus, it is an object of the present invention to provide a pneumatic tire for motorcycles which can exhibit a performance of a new tire at an early period and enables visual confirmation that the tire as new is worn to such an extent as to be capable of sufficiently exhibiting its performance.

### MEANS FOR SOLVING THE PROBLEMS

In order to solve the above problems, the present inventors intensively studied to discover the findings below. That is, it has been found out that a tread portion is provided with a shallow groove, thereby facilitating the wear of the tread portion when used as a brand new product to allow a performance of the new tire to be exhibited at an early period and enable visual confirmation that the tire as new is worn to such an extent as to be capable of sufficiently exhibiting its performance whereby the above problems can be solved, and the present invention has been accomplished.

In other words, a pneumatic tire for motorcycles of the present invention includes a tread portion formed into a ring shape, characterized in that
the tread portion is provided with a width direction shallow groove in which the shallow groove having a width of 0.1 to 2.0 mm and a depth of 0.1 to 2.0 mm is designed to extend at least in a tire width direction, a length of the shallow groove is greater than or equal to 50% of a width of a tire ground contact surface, and the width direction shallow groove is provided at intervals which are shorter than a length of the tire ground contact surface.

In the tire of the present invention, preferably, a width of the shallow groove provided to the tread portion is designed to change in an extending direction of the shallow groove.

In the tire of the present invention, preferably, the shallow groove further includes a circumferential direction shallow groove designed to extend in a tire circumferential direction, and when a ground contact region of the tread portion during straight running is a center region and each of both outer sides of the center region in a tire width direction is a shoulder region, and
in one of either the center region or the shoulder region, one of either a total length of a border line of the circumferential direction shallow groove or a total length of a border line of the width direction shallow groove is greater than the other.

Further, in the tire of the present invention, preferably, when a ground contact region of the tread portion during straight running is a center region and each of both outer sides of the center region in a tire width direction is a shoulder region, at least in the shoulder region, a plurality of at least two types of shallow grooves which extending directions differ from each other are provided, and
at least a part of the shallow grooves intersect with each other, and at least a part of the shallow grooves opens at a tread end.

Still further, in the tire of the present invention, a number of the shallow grooves may be greater in the center region than in the shoulder region of the tread portion and may be greater in the shoulder region than in the center region of the tread portion. Moreover, in the tire of the present invention, a depth of the shallow groove may be greater in the center region than in the shoulder region of the tread portion and may be greater in the shoulder region than in the center region of the tread portion. Further, in the tire of the present invention, a width of the shallow groove may be greater in the center region than in the shoulder region of the tread portion and may be greater in the shoulder region than in the center region of the tread portion.

Herein, used to indicate an extending direction of the shallow groove, the tire circumferential direction means a range of ±45° relative to a tire equator and the tire width direction means a range greater than -45° and less than 45° relative to a direction vertical to the tire equator. Note that when a shape of the shallow groove is not linear, a direction of the shallow groove refers to a direction of a line in which both ends of the shallow groove are connected to each other. Moreover, the center region of the tread portion refers to a ground contact region during straight running in the state in which the tire is fitted to a prescribed rim, a prescribed internal pressure is charged, and a maximum load weight is loaded, and the shoulder region refers to a region of a tire width direction outer side than the center region in the tread portion. Further, herein, the prescribed rim refers to a standard rim (or "approved rim" and "recommended rim") of an applicable size specified in a predetermined industrial standard, and the prescribed internal pressure refers to a pneumatic pressure corresponding to a maximum load (maximum load capacity) of a single wheel of an applicable size specified in the same standard. Still further, the maximum load weight refers to a maximum load (maximum load capacity) of a single wheel of an applicable size specified in the same standard. Regarding such an industrial standard, an effective standard is set in each region where the tire is manufactured or used, and such a standard is specified, for example, in each of "the Tire and Rim Association Inc. Year Book" (inclusive of design guides) in the United States of America, "the European Tire and Rim Technical Organization Standards Manual" in Europe, and "JATMA YEAR BOOK" by the Japan Automobile Tire Manufacturer Association in Japan. Further, in the tire of the present invention, the width of the ground contact surface width refers to a length of a portion that is the largest in a width direction in a ground contact surface under a normal load and a normal internal pressure.

### EFFECTS OF THE INVENTION

According to the present invention, there can be provided a pneumatic tire for motorcycles which can exhibit a performance of a new tire at an early period and enables visual confirmation that the tire as new is worn to such an extent as to be capable of sufficiently exhibiting its performance.

### BRIEF DESCRIPTION OF THE DRAWINGS

FIG. 1 is a schematic developed view of a tread portion of a pneumatic tire for motorcycles according to a preferred embodiment of the present invention.
FIG. 2 is a schematic plan view illustrating examples of a shape of a width direction shallow groove of the pneumatic tire for motorcycles according to a preferred embodiment of the present invention.
FIG. 3 is a schematic cross-sectional view illustrating examples of a change of a depth in an extending direction of the width direction shallow groove of the pneumatic tire for motorcycles of the present invention.
FIG. 4 is a schematic cross-sectional view illustrating examples of a cross-sectional shape in a groove width direction of the width direction shallow groove of the pneumatic tire for motorcycles of the present invention.
FIG. 5 is a schematic developed view of a tread portion of the pneumatic tire for motorcycles according to another preferred embodiment of the present invention.
FIG. 6 is a schematic plan view illustrating examples of a change of a width in an extending direction of a shallow groove of the pneumatic tire for motorcycles of the present invention.
FIG. 7 is a schematic developed view of a tread portion of the pneumatic tire for motorcycles according to still another preferred embodiment of the present invention.
FIG. 8 is a schematic developed view of a tread portion of the pneumatic tire for motorcycles according to still another preferred embodiment of the present invention.
FIG. 9 is a schematic developed view of a tread portion of the pneumatic tire for motorcycles according to still another preferred embodiment of the present invention.
FIG. 10 is a schematic cross-sectional view in a width direction of the pneumatic tire for motorcycles according to a preferred embodiment of the present invention.

### MODE FOR CARRYING OUT THE INVENTION

Hereinafter, a pneumatic tire for motorcycles of the present invention will be described in detail with reference to the drawings.

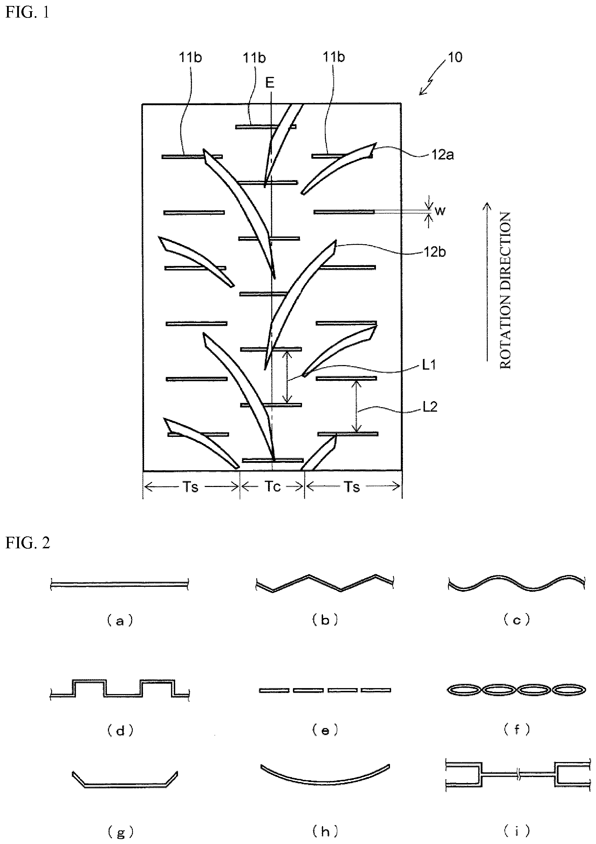

In FIG. 1, there is illustrated a schematic developed view of a tread portion of the pneumatic tire for motorcycles according to a preferred embodiment of the present invention. An arrow in the figure refers to a rotation direction, and the tire is designed to come into contact with the ground from an arrow side top end during running. The tire of the present invention includes a tread portion 10 formed into a ring shape, and the tread portion 10 is provided with a shallow groove 11 in a tire width direction (hereinafter, also referred to as "width direction shallow groove 11b"). In an example as illustrated, there are provided rows composed of the plurality of width direction shallow grooves 11b in which one row is provided to a center region Tc and one row is each provided to both shoulder regions Ts. Note that in the example as illustrated, two types of main grooves 12a, 12b are periodically provided at equal pitches, but a shape of a main groove 12 is not particularly limited and is not to be limited to the example as described above. For example, as the main groove, a circumferential direction groove which is continuously formed in a circumferential direction may be also provided. Further, in the tire of the present invention, besides the width direction shallow groove 11b, a shallow groove which extends in a tire circumferential direction (hereinafter, also referred to as "circumferential direction shallow groove") may be also provided.

In the tire of the present invention, the tread portion 10 is provided with the width direction shallow groove 11b so that the effects as described below can be obtained. First, in the tire as new, the silicon used at the tire vulcanization process is present at a surface layer and so it is slippery when used as a brand new product. Accordingly, in order to allow a performance of the tire to be completely exhibited, the surface layer of the tread portion 10 is to be worn to a certain extent. In the tire of the present invention, the tread portion 10 is provided with the width direction shallow groove 11b, whereby the tread portion 10 is likely to be worn so as to allow a performance of a new tire to be exhibited at an early period. Further, due to the width direction shallow groove 11b, a water evacuation property and a traction property are improved, while a rubber of the tread portion 10 is facilitated to move at the time of a ground contact and heat dissipation is facilitated so as to allow a grip performance to be exhibited at an early period. Moreover, due to this width direction shallow groove 11b, an external appearance can be also improved.

In the tire of the present invention, a width of the width direction shallow groove 11b is 0.1 to 2.0 mm, preferably 0.5 to 1.5 mm. If the width of the width direction shallow groove 11b is less than 0.1 mm, a sufficient water evacuation property may not be obtained, and on the other hand, if the width of the width direction shallow groove 11b is greater than 2.0 mm, a rigidity of the tread portion 10 is reduced so that a steering stability deteriorates, while a ground contact area is reduced, and accordingly a sufficient grip performance may not be obtained. Herein, a width w of the width direction shallow groove 11b refers to a width of an opening portion on a section orthogonal to an extending direction of the width direction shallow groove 11b. Further, when the width of the width direction shallow groove 11b changes in an extending direction of the width direction shallow groove 11b, the width w of the width direction shallow groove 11b refers to a portion that is the largest of the width direction shallow groove 11b.

Moreover, a depth of the width direction shallow groove 11b is 0.1 to 2.0 mm, preferably 0.2 to 0.5 mm. If the depth of the width direction shallow groove 11b is less than 0.1 mm, a water evacuation property may not be sufficiently obtained, and on the other hand, if the depth of the width direction shallow groove 11b is greater than 2.0 mm, a rigidity of the tread portion 10 is inevitably reduced so that a steering stability may deteriorate. Herein, when the depth of the width direction shallow groove 11b changes in an extending direction of the width direction shallow groove 11b, the depth of the width direction shallow groove 11b refers to a portion that is the deepest of the width direction shallow groove 11b. Note that when such a deep groove as to have a depth greater than 2.0 mm is provided, uneven wear may occur in a conventional tire, whereas in the tire of the present invention, such a problem does not occur. Further, the depth of the width direction shallow groove 11b refers to a distance from a tread surface of the tread portion 10 to a groove bottom of the width direction shallow groove 11b, and does not include a protrusion provided at the groove bottom of the width direction shallow groove 11b. Herein, the protrusion refers to that a peripheral border line shape of which is a shape having a curved line, such as a circular shape, an oval shape and the like or a polygonal shape, such as a parallelogram, a rhombus and the like.

Further, in the tire of the present invention, a length of the width direction shallow groove 11b is greater than or equal to 50%, preferably 80% of a width of a tire ground contact surface, and the entirety of the width direction shallow groove 11b may also extend to tread ends and open at the tread ends, or only a part of the width direction shallow groove 11b may also open at the tread end. With such a configuration, a favorable initial water evacuation property can be obtained. An angle of the width direction shallow groove 11b is preferably provided in such a manner as to be orthogonal to an input direction in view of allowing an edge component to be increased. Note that a part or the entirety of the width direction shallow groove 11b may also terminate approximately 20 mm before the tread ends.

Further, the width direction shallow groove 11b is provided at intervals which are shorter than a length of the tire ground contact surface. Preferably, the width direction shallow groove 11b is provided in such a manner as to be constantly two or more in the tire ground contact surface. With such a range, the effects as described above can be favorably obtained. Note that in the tire of the present invention, a shape of the width direction shallow groove 11b is not particularly limited and, as illustrated in FIG. 1, a linear shape which extends along the tire width direction may be employed, or a zigzag shape and a wave shape may be also employed. In FIGS. 2(a) to 2(i), there are illustrated examples of a shape of a width direction shallow groove of the pneumatic tire for motorcycles according to a preferred embodiment of the present invention, to which, however, in the tire of the present invention, a shape of the shallow groove is not to be limited.

In FIG. 2(a), there is a shallow groove which extends linearly in a tire width direction; in FIG. 2(b), there is a shallow groove which extends in a zigzag-shaped manner in the width direction; in FIG. 2(c), there is a shallow groove which extends in a wave-shaped manner in the width direction; and in FIG. 2(d), there is a shallow groove which extends alternately in the width direction and in a circumferential direction but extends overall in the tire width direction. In FIG. 2(e), there is a shallow groove which extends linearly in a discontinuous manner in the width direction; in FIG. 2(f), there is a shallow groove in which a plurality of shallow grooves formed into a substantially oval shape are provided in the tire width direction, the shallow groove extending overall in the width direction; in FIG. 2(g), there is a shallow groove in which both end portions of the shallow groove extending linearly in the width direction extend in a circumferential direction, the shallow groove, however, extending overall in the width direction; in FIG. 2(h), there is a shallow groove which has a curved shape but extends overall in the width direction; and in FIG. 2(i), there is a shallow groove having a branch at both end portions of a shallow groove extending linearly in the width direction. Shapes in FIGS. 2(g) and 2(h) have an advantage of easily rejecting and avoiding a screw and the like.

Further, in the tire as illustrated in FIG. 1, with respect to the width direction shallow groove 11b, one row is provided to the center region Tc and two rows are provided to the shoulder regions Ts so that three rows are provided in total, to which, however, the number of rows of the width direction shallow groove 11b is not to be limited. Moreover, in the tire of the present invention, the number of width direction shallow grooves 11b may be greater in the center region Tc than in the shoulder regions Ts of the tread portion 10, and may be also greater in the shoulder regions Ts than in the center region Tc. In other words, it may be also designed that intervals of the width direction shallow groove 11b in the center region Tc and in the shoulder regions Ts are different from each other. Increasing the number of shallow grooves 11b in the center region Tc further improves a water evacuation property, which accordingly allows a grip performance on a wet road surface to be improved and, at the same time, allows a traction property to be improved as well. On the other hand, increasing the number of width direction shallow grooves 11b in the shoulder regions Ts facilitates movement of the rubber in the shoulder regions Ts at the time of a ground contact and further facilitates heat dissipation so as to further allow a grip performance to be exhibited at an early period. Further, because the shoulder regions Ts have less ground contact occasions than the center region Tc, providing the shoulder regions Ts with the shallow groove allows also such an effect as to improve a grip performance in the shoulder regions Ts to be obtained and further allows a water evacuation property during a turn to be improved as well.

Further, in the tire of the present invention, the depth of the width direction shallow groove 11b may be greater in the center region Tc than in the shoulder regions Ts of the tread portion 10, and may be also greater in the shoulder regions Ts than in the center region Tc. This is because increasing the depth of the width direction shallow groove 11b in the center region Tc further improves a water evacuation property and a traction property, which accordingly allows a grip performance on a wet road surface to be improved and, on the other hand, increasing the depth of the shallow groove 11b in the shoulder regions Ts facilitates movement of the rubber in the shoulder regions Ts at the time of a ground contact and further facilitates heat dissipation so as to further allow a grip performance to be exhibited at an early period. For a similar reason, the width of the width direction shallow groove 11b may be greater in the center region Tc than in the shoulder regions Ts of the tread portion 10, and may be also greater in the shoulder regions Ts than in the center region Tc. Note that in the tire of the present invention, the depth of the width direction shallow groove 11b is not required to be constant and may also change along the width direction. For example, such a configuration that the center region Tc of the width direction shallow groove 11b is made to be shallow and the shoulder regions Ts thereof is made to be deep and the like may be employed.

Still further, in the tire of the present invention, the intervals of the width direction shallow groove 11b, which are L1 and L2 as illustrated in FIG. 1, are preferably 10 to 100 mm. Herein, the intervals of the width direction shallow groove 11b refer to a length of a tread portion surface under a normal internal pressure and no load. If the intervals of the substantially parallel width direction shallow groove 11b are less than 10 mm, a rigidity of the tread portion 10 is reduced so that a steering stability may deteriorate. Further, an area of the width direction shallow groove 11b in relation to the entirety of the ground contact surface is increased so that a grip performance may deteriorate. On the other hand, if the intervals of the width direction shallow groove 11b are greater than 100 mm, a water evacuation property and a traction property deteriorate and movement of the tread portion 10 becomes difficult so that effects of the present invention may not be sufficiently obtained. Note that an interval between the shallow grooves when the width direction shallow groove 11b has a zigzag shape or the like is a distance between center positions of the amplitude of the shallow grooves.

Moreover, as described above, in the tire of the present invention, the depth of the width direction shallow groove 11b may also change in an extending direction. For example, the depth may be different at positions in the width direction of the tread portion 10. Thus, suitably adjusting the depth of the width direction shallow groove 11b allows a water evacuation property to be adjusted, and adjusting a rigidity of the tread portion allows a grip performance to be adjusted.

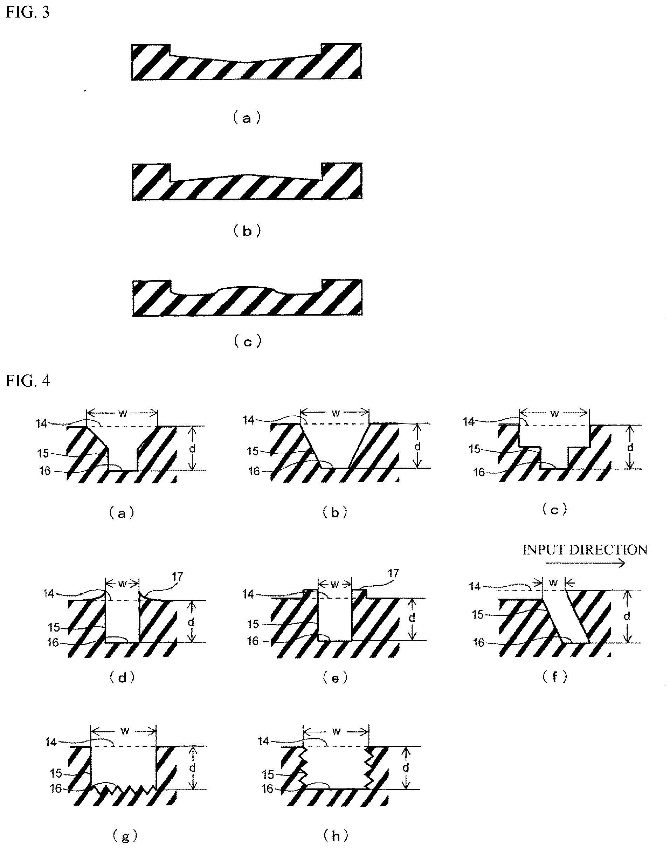

FIGS. 3(a) to 3(c) are schematic cross-sectional views illustrating examples of a change of a depth in an extending direction of the width direction shallow groove of the pneumatic tire for motorcycles of the present invention. In FIG. 3(a), there is a shape in which a groove depth decreases linearly toward a tire width direction outer side, and in FIG. 3(b), there is a shape in which the groove depth increases linearly toward the tire width direction outer side. In FIG. 3(c), there is a curved surface which protrudes toward a tire radial direction outer side in the vicinity of the center of a groove bottom and a curved surface which is recessed toward a tire radial direction inner side in the vicinity of both side portions of the groove bottom, which overall forms a wave shape.

Deepening a center region Tc side of the width direction shallow groove 11b further improves a water evacuation property, which accordingly allows a grip performance on a wet road surface to be improved. On the other hand, deepening a shoulder regions Ts side of the width direction shallow groove 11b facilitates movement of the rubber in the shoulder regions Ts at the time of a ground contact and further facilitates heat dissipation so as to further allow a grip performance during a turn to be improved and further allow a water evacuation property during a turn to be improved as well. Note that a shallow portion of the groove bottom of the width direction shallow groove 11b provides a criterion for determining a degree of wear of the tire.

Further, FIGS. 4(a) to 4(h) are schematic cross-sectional views illustrating examples of a cross-sectional shape in a groove width direction of the width direction shallow groove of the pneumatic tire for motorcycles of the present invention. In the tire of the present invention, there may be employed a shape different from a virtual cross-sectional shape which is composed of a border line 14 of the tread portion 10, a pair of groove walls 15 substantially orthogonal to the border line 14, and a groove bottom 16 connecting the pair of groove walls 15 and substantially parallel to the border line 14. Herein, the groove walls 15 and the groove bottom 16 may be connected to each other in an orthogonal manner and may be connected in a curved manner. In other words, in the tire of the present invention, a cross-sectional shape of the width direction shallow groove 11b may be also a shape in which at least a part of the pair of the groove walls 15 is tapered, a shape which narrows in a depth direction (tire radial direction) of the width direction shallow groove 11b in a stepwise manner, and the like, which are different from a typical shape. Moreover, at an opening edge of the width direction shallow groove 11b of the tread portion, a protrusion portion 17 may be also provided. Further, the groove walls 15 or the groove bottom 16 may be also provided with protrusions and recesses which extend in an extending direction of the width direction shallow groove 11b.

In FIG. 4(a), the groove walls 15 have a tapered shape only in the vicinity of the opening portion, and in FIG. 4(b), the entirety of the groove walls 15 has a tapered shape. Thus, the opening portion of the width direction shallow groove 11b is designed to have a tapered shape, thereby allowing a water evacuation property to be further favorable without deteriorating an edge effect. Moreover, in FIG. 4(c), there is a shape in which the width of the width direction shallow groove 11b narrows in the groove depth direction in a stepwise manner. With such a shape, a degree of wear of the tread portion 10 can be determined in a stepwise manner. Further, in FIGS. 4(d) and 4(e), there are shapes in which at an opening edge of the width direction shallow groove 11b, a protrusion portion 17 is provided: in FIG. 4(d), there is a shape which rises gradually toward the opening edge of the width direction shallow groove 11b; and in FIG. 4(e), there is a shape in which the opening edge of the width direction shallow groove 11b rises substantially vertically. Thus, at the opening edge of the width direction shallow groove 11b, the protrusion portion 17 is provided so that a ground contact pressure at end portions of the width direction shallow groove 11b is increased, and a further favorable edge effect can be expected. Moreover, an effect of improvement of visibility as well can be also obtained. Note that in such a case, a height of the protrusion portion 17 is designed to be less than the depth of the width direction shallow groove 11b. Still moreover, in FIG. 4(f), there is a shape in which, when viewed from an input direction, the frontward groove wall 15 is low and the backward groove wall 15 is high. Thus, the groove walls 15 are provided in a stepwise manner, whereby a favorable edge effect can be obtained. Further, in FIGS. 4(g) and 4(h), there are shapes in which the groove bottom 16 and the groove walls 15 are respectively provided with protrusions and recesses. Thus, in the interior of the width direction shallow groove 11b, grooves are further provided, whereby visibility of the width direction shallow groove 11b is improved. Moreover, the groove bottom 16 is provided with protrusions and recesses so that after wear of the width direction shallow groove 11b, the protrusions and recesses of the groove bottom 16 appears, which is thus excellent in design as well. Note that when the cross-sectional shape of the width direction shallow groove 11b is a tapered shape and when the groove walls 15 or the groove bottom 16 are provided with protrusions and recesses which extend in an extending direction of the width direction shallow groove 11b, the depth of the width direction shallow groove 11b is based on the border line 14 of the virtual cross-sectional shape and the width of the width direction shallow groove 11b is also based on a width of an opening portion of the virtual cross-sectional shape.

In the tire of the present invention, there may be also provided decoration patterns called as serration in which a plurality of ridges are arranged at the width direction shallow groove 11b at predetermined pitches. Further, using shallow grooves, the tread portion 10 may be also provided with information or decorative patterns such as characters and signs of a name of a maker and the like, or figures, patterns and the like to exhibit a state of use of a camber angle. Still further, when circumferential direction shallow grooves and width direction shallow grooves which are inclined with respect to the circumferential direction are provided, those shallow grooves may be also designed to have an arrow shape so as to be a rotation mark.

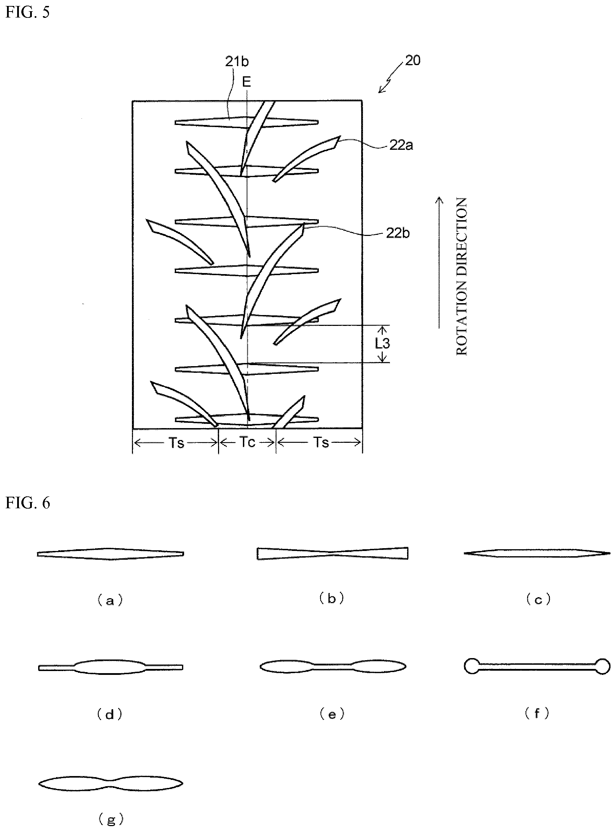

In FIG. 5, there is illustrated a schematic developed view of a tread portion of a pneumatic tire for motorcycles according to another preferred embodiment of the present invention. An arrow in the figure refers to a rotation direction, and the tire is designed to come into contact with the ground from an arrow side top end during running. The tire of the present invention includes a tread portion 20 formed into a ring shape, and the tread portion 20 is provided with a shallow groove 21. In an example as illustrated, the plurality of shallow grooves 21 (width direction shallow grooves 21b) are provided in the tire width direction, but a circumferential direction shallow groove which extends in the tire circumferential direction may be also provided.

Moreover, in the example as illustrated, two types of main grooves 22a, 22b are periodically provided at equal pitches, but a shape of a main groove 22 is not particularly limited and is not to be limited to the example as described above. For example, as the main groove, a circumferential direction groove which is continuously formed in the circumferential direction may be also provided.

As illustrated, in the tire of the present invention, a depth of the shallow groove 21 (the width direction shallow groove 21b and the circumferential direction shallow groove; the width direction shallow groove 21b in the example as illustrated) may also change in an extending direction. For example, the depth may be different at positions in the width direction of the tread portion 20. Thus, suitably adjusting the depth of the width direction shallow groove 21b allows a water evacuation property to be adjusted, and adjusting a rigidity of the tread portion 20 allows a grip performance to be adjusted. In the tire of the present invention, a shape of the shallow groove 21 is not particularly limited.

In FIGS. 6(a) to 6(g), there are illustrated schematic plan views illustrating examples of a change of a width in an extending direction of a shallow groove of a pneumatic tire for motorcycles of the present invention, to which, however, in the tire of the present invention, a shape of the shallow groove is not to be limited. In FIG. 6(a), there is a shallow groove in which a groove width is the largest at the middle portion, and the groove width narrows linearly toward shallow groove both side ends, in FIG. 6(b), there is a shallow groove in which the groove width is the smallest at the middle portion, and the groove width increases linearly toward the shallow groove both side ends, and in FIG. 6(c), there is a shallow groove in which the shallow groove both side ends gradually narrow. Further, in FIG. 6(d), there is a shallow groove in which the middle portion has an oval shape and both side end portions have a linear shape, in FIG. 6(e), there is a shallow groove in which the middle portion has a linear shape and the both side end portions have an oval shape, and in FIG. 6(f), there is a shallow groove in which the middle portion has a linear shape and the both side end portions have a substantially perfectly circular shape. In FIG. 6(g), there is a shallow groove having a shape in which two shallow grooves having an oval shape are aligned. As in FIGS. 6(e), 6(f), and 6(g), the both end portions fail to be provided with a portion having an acute angle, which prevents a crack. Note that the middle portion refers to a middle portion when the shallow groove is trisectionally divided in an extending direction.

Widening the center region Tc side of the shallow groove 21 further improves a water evacuation property, which accordingly allows a grip performance on a wet road surface to be improved. On the other hand, widening the shoulder regions Ts side of the shallow groove 21 facilitates movement of the rubber in the shoulder regions Ts at the time of a ground contact and further facilitates heat dissipation so as to further allow a grip performance during a turn to be improved and further allow a water evacuation property during a turn to be improved as well.

Further, also in the present embodiment, intervals of the substantially parallel shallow groove 21 (width direction shallow grooves 21b in FIG. 5), which are L3 as illustrated, are preferably 10 to 100 mm. Herein, the intervals of the shallow groove 21 refer to a length of a tread portion surface under a normal internal pressure and no load. If the intervals of the shallow groove 21 are less than 10 mm, a rigidity of the tread portion 20 is reduced so that a steering stability may deteriorate. Further, an area of the shallow groove 21 in relation to the entirety of the ground contact surface is increased so that a grip performance may deteriorate. On the other hand, if the intervals of the shallow groove 21 are greater than 100 mm, a water evacuation property and a traction property deteriorate and movement of the tread portion 20 becomes difficult so that effects of the present invention may not be sufficiently obtained. Note that an interval between the shallow grooves having a zigzag shape or the like is a distance between center positions of the amplitude of the shallow grooves.

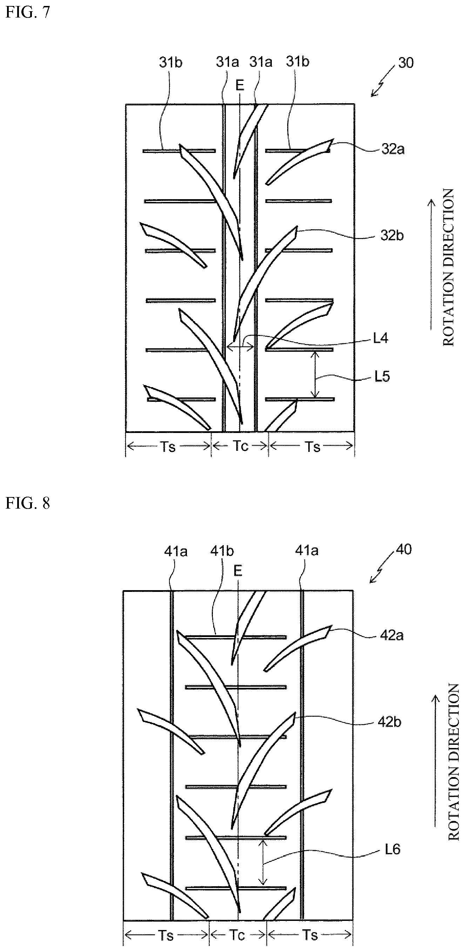

Next, in FIG. 7, there is illustrated a schematic developed view of a tread portion of a pneumatic tire for motorcycles according to still another preferred embodiment of the present invention. An arrow in the figure refers to a rotation direction, and the tire is designed to come into contact with the ground from an arrow side top end during running. The tire according to the present embodiment includes a tread portion 30 formed into a ring shape, and the tread portion 30 is provided with a circumferential direction shallow groove 31a and a width direction shallow groove 31b. In an example as illustrated, the two circumferential direction shallow grooves 31a are provided in the center region Tc and one row of the width direction shallow grooves 31b is provided in each of the both shoulder regions Ts. In the example as illustrated, two types of main grooves 32a, 32b are periodically provided at equal pitches, but a shape of a main groove 32 is not particularly limited and is not to be limited to the example as described above. For example, as the main groove, a circumferential direction groove which is continuously formed in the circumferential direction may be also provided.

Moreover, FIG. 8 is a schematic developed view of a tread portion of a pneumatic tire for motorcycles according to still another preferred embodiment of the present invention. In an example as illustrated, a tread portion 40 formed into a ring shape is provided, a circumferential direction shallow groove 41a is provided only in the shoulder regions Ts and a width direction shallow groove 41b is provided over from the center region Tc to a part of the shoulder regions Ts, and similarly to FIG. 7, two types of main grooves 42a, 42b are periodically provided at equal pitches, but a shape of a main groove 42 is not particularly limited and is not to be limited to the example as described above. For example, as the main groove, a circumferential direction groove which is continuously formed in the circumferential direction may be also provided.

In the tire according to the present embodiment, preferably, in one of either the center region Tc or the shoulder region Ts, either one of a total of a length of a border line of the circumferential direction shallow groove or a total of a length of a border line of the width direction shallow groove is greater than the other. For example, in the center region Tc, a total of a length of a border line of the circumferential direction shallow groove may be also greater than a total of a length of a border line of the width direction shallow groove, or in the center region Tc, a total of a length of a border line of the width direction shallow groove may be also greater than a total of a length of a border line of the circumferential direction shallow groove.

In the example as illustrated in FIG. 7, the circumferential direction shallow groove 31a is provided only in the center region Tc, and the width direction shallow groove 31b is provided over from the shoulder region Ts to a part of the center region Tc. Accordingly, in the center region Tc, a total of a length of a border line of the circumferential direction shallow groove 31a is greater than a total of a length of a border line of the width direction shallow groove 31b. Thus, providing the circumferential direction shallow groove 31a mainly in the center region Tc allows a water evacuation property to be favorably improved. On the other hand, in the example as illustrated in FIG. 8, in the center region Tc, a total of a length of a border line of the width direction shallow groove 41b is greater than a total of a length of a border line of the circumferential direction shallow groove 41a. Thus, providing the width direction shallow groove 41b mainly in the center region Tc allows a traction property to be favorably improved.

Also in the tire according to the present embodiment, the entirety of the circumferential direction shallow groove which have an angle in relation to the circumferential direction and the width direction shallow groove may also extend to tread ends and open at the tread ends, or only a part of the shallow grooves 31, 41 may also open at the tread end. With such a configuration, a favorable initial water evacuation property can be obtained. An angle of the shallow grooves 31, 41 is preferably provided in such a manner as to be orthogonal to an input direction in view of allowing an edge component to be increased. Further, a part or the entirety of the shallow groove may also terminate approximately 20 mm before the tread ends.

Note that in the present embodiment, a width, a depth, a shape, a cross-sectional shape and the like of the circumferential direction shallow grooves 31a, 41a and the width direction shallow grooves 31b, 41b and effects thereof are similar to those of the circumferential direction shallow groove of the tire according to the preferred embodiment as described above.

In the tire according to the present embodiment, intervals of the substantially parallel shallow grooves 31, 41 (circumferential direction shallow grooves 31a, 41a, and width direction shallow grooves 31b, 41b), which are L4, L5, and L6 as illustrated, are preferably 10 to 100 mm. Herein, the intervals of the shallow grooves 31, 41 refer to a length of a tread portion surface under a normal internal pressure and no load. If the intervals of the shallow grooves 31, 41 are less than 10 mm, a rigidity of the tread portions 30, 40 is reduced so that a steering stability may deteriorate. Further, an area of the shallow grooves 31, 41 in relation to the entirety of the ground contact surface is increased so that a grip performance may deteriorate. On the other hand, if the intervals of the shallow grooves 31, 41 are greater than 100 mm, a water evacuation property and a traction property deteriorate and movement of the tread portions 31, 41 becomes difficult so that effects of the present invention may not be sufficiently obtained. Note that an interval between the shallow grooves having a zigzag shape or the like is a distance between center positions of the amplitude of the shallow grooves.

Further, similarly to the width direction shallow groove of the tire according to the preferred embodiment as described above, in the tire of the present invention, the depth of the shallow grooves 31, 41 (circumferential direction shallow grooves 31a, 41a and width direction shallow grooves 31b, 41b) may also change in an extending direction. For example, the depth may be different at positions in the extending direction of the tread portions 30, 40. Thus, suitably adjusting the depth of the shallow grooves 31, 41 allows a water evacuation property to be adjusted, and adjusting a rigidity of the tread portions 30, 40 allows a grip performance to be adjusted.

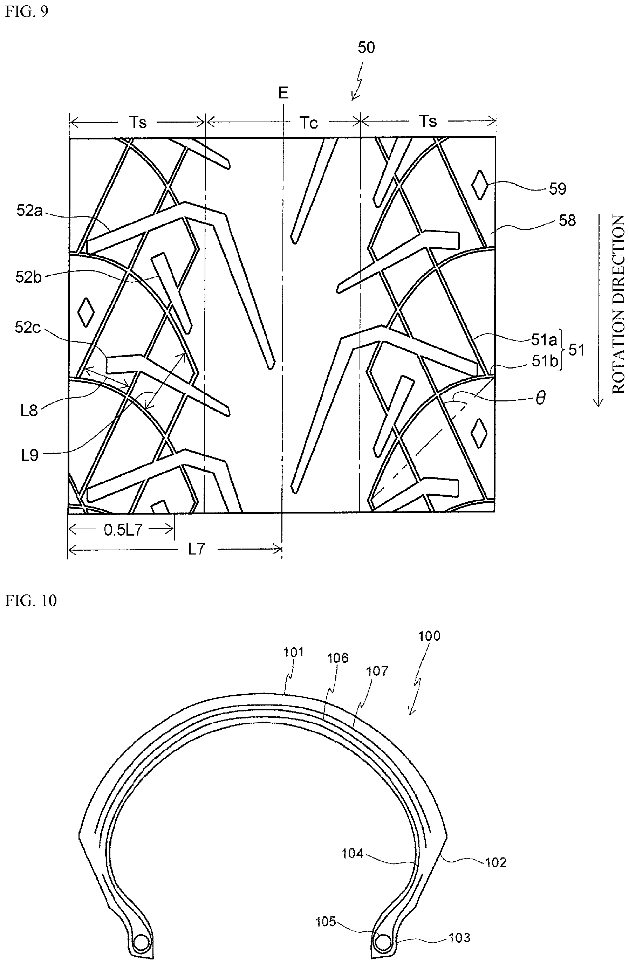

Nest, in FIG. 9, there is illustrated a schematic developed view of a tread portion of the pneumatic tire for motorcycles according to still another preferred embodiment of the present invention. An arrow in the figure refers to a rotation direction, and the tire is designed to come into contact with the ground from an arrow side top end during running.

Motorcycles turn by tilting a vehicle body in relation to a road surface. Accordingly, during straight running and cornering, a ground contact region of a tread portion differs from each other, and a center region of the tread portion during straight running and shoulder regions of the tread portion during cornering come into contact with a road surface. Thus, a pneumatic tire for motorcycles in which a ground contact region differs from each other during straight running and during cornering is required to have a favorable water evacuation property and an excellent grip performance during transition from straight running to cornering.

With respect to such a technique, for example, Japanese Unexamined Patent Application Publication No. 2009-101722 can be cited. A pneumatic tire for motorcycles disclosed in Japanese Unexamined Patent Application Publication No. 2009-101722 is formed by a tread center region including a tire equatorial surface, a tread end region constituting a tread end side, and a tread middle region constituting a space between the tread center region and the tread end region, in which the tread center region and the tread end region are a slick portion in which no groove is provided, and in the tread middle region, a rag groove which intersects with a tire circumferential direction U and a block row is provided.

Typically, a tread rubber of a tire is designed in such a manner as to be capable of exhibiting a maximum performance at a certain temperature or more. However, in a case of motorcycles, during normal running, a straight running time occupies a large ratio, and heat dissipation due to friction at a shoulder region which is used during cornering may lack. Thus, at the time of low temperature, shortage of grip performance is concerned during cornering. Such concerns become even more increased when the ground is wet.

Thus, the tire according to the present embodiment includes a tread portion 50 formed into a ring shape, in which when a ground contact region of the tread portion 50 during straight running is a center region Tc and each of both outer sides of the center region Tc in the tire width direction is a shoulder region Ts, at least in the shoulder region Ts, preferably in the shoulder region Ts, a plurality of at least two types of shallow grooves 51 which have a width of 0.1 to 2.0 mm and a depth of 0.1 to 2.0 mm and differ from each other in an extending direction are provided. In the present embodiment, at least one type is a width direction shallow groove.

In an example as illustrated in FIG. 9, the shallow groove 51 consists of two types of shallow grooves which include a circumferential direction shallow groove 51a which extends from a first arrival side in a rotation direction toward a tire width direction inner side and a width direction shallow groove 51b which extends from a first arrival side in the rotation direction toward a tire width direction outer side. Moreover, in the example as illustrated, a shape of the circumferential direction shallow groove 51a is a linear shape and the width direction shallow groove 51b has a curved shape, but both may have a substantially straight shape having a large curvature radius and may have a shape other than the same. Note that in the example as illustrated, three types of main grooves 52a, 52b, 52c which have a groove width and a groove depth greater than the shallow grooves 51 are periodically provided at equal pitches, but, in the tire according to the present invention, a shape of a main groove 52 is not particularly limited and is not to be limited to the example as described above. For example, as the main groove, a circumferential direction groove which is continuously formed in the circumferential direction may be also provided.

In the tire according to the present embodiment, at least a part of the shallow grooves 51 intersect with each other, whereby a land portion 58 which is partitioned by the shallow grooves 51 is formed. The land portion 58 provided by intersecting the shallow grooves 51 has a small area so as to easily move at the time of ground contact and heat dissipation is facilitated so as to allow a grip performance in the shoulder region Ts to be exhibited at an early period. Moreover, due to the shallow grooves 51, an external appearance can be also improved. Further, in the tire as new, silicon used at the tire vulcanization process is present on a surface layer and so it is slippery when used as a brand new product. Accordingly, in order to allow a performance of the tire to be completely exhibited, the surface layer of the tread portion 50 is to be worn to a certain extent. In the tire according to the present embodiment, the shoulder region Ts is provided with the shallow grooves 51, whereby the shoulder region Ts is likely to be worn so as to allow a new tire performance to be exhibited at an early period.

Further, in the tire according to the present embodiment, a part of the shallow grooves 51 extends to a tread end to form an opening. Accordingly, the shallow grooves 51 allow an initial water evacuation property to be improved and allow a grip performance on a wet road surface to be improved. In the tire according to the present embodiment, when a distance along a surface of the tread portion 50 from a tire equator E to the tread end along a surface of the tread portion 50 is L7, the shallow grooves 51 are preferably provided at least in a region from the tread end to 0.5 L7. Thereby, effects of the present invention can be favorably obtained. Herein, the distance L7 is a value measured in a state in which the tire is fitted to the prescribed rim, the prescribed internal pressure is charged, and no load is applied.

Also in the tire according to the present embodiment, a width of the shallow groove 51 is 0.1 to 2.0 mm, preferably 0.5 to 1.5 mm. If the width of the shallow groove 51 is less than 0.1 mm, a sufficient water evacuation property may not be obtained, and on the other hand, if the width of the shallow groove 51 is greater than 2.0 mm, a rigidity of the land portion 58 is reduced so that a steering stability deteriorates, while a ground contact area of the land portion 58 is reduced, and accordingly a sufficient grip performance may not be obtained. Moreover, a depth of the shallow groove 51 is 0.1 to 2.0 mm, preferably 0.2 to 0.5 mm. If the depth of the shallow groove 51 is less than 0.1 mm, a water evacuation property may not be sufficiently obtained, and on the other hand, if the depth of the shallow groove 51 is greater than 2.0 mm, a rigidity of the land portion 58 is inevitably reduced so that a steering stability may deteriorate. Further, also in the present embodiment, a shape, a width and the like of the shallow groove are as described above.

In the tire according to the present embodiment, as illustrated, the entirety of the shallow grooves 51 may be inclined with respect to the tire circumferential direction and the tire width direction. Particularly, the inclination is preferably made in such a manner that an angle θ which is made by the shallow grooves 51 intersecting with each other is 5 to 80°. If the angle made by the shallow grooves 51 is less than 5°, the land portion 58 in the vicinity of the intersection position of the shallow grooves 51 becomes thin and cracking occurs, which is not preferable. On the other hand, the angle θ is designed to be 80° or less, whereby effects of the present invention can be favorably obtained.

In the tire according to the present embodiment, the shallow grooves 51 are preferably provided in a lattice pattern. The shallow grooves 51 are provided in a lattice pattern so that areas of the land portions 58 intersected by the shallow grooves 51 are substantially equal to each other, and accordingly, heat dissipation and water evacuation performance of the land portions 58 at the time of ground contact can be made to be uniform. In the tire of the present invention, the shallow grooves 51 which form a lattice and face each other are preferably parallel to each other but are not necessarily required to be parallel to each other and deviation of 5° or less may be allowed.

Further, in the tire according to the present embodiment, intervals of the shallow groove 51 that have the same extending direction, which are L8 and L9 in FIG. 9 are preferably 10 to 100 mm. If the intervals of the shallow groove 51 are less than 10 mm, a rigidity of the land portion 58 is reduced so that a steering stability may deteriorate. Further, an area of the shallow groove 51 in relation to the entirety of the ground contact surface is increased so that a grip performance may deteriorate. On the other hand, if the intervals of the shallow groove 51 are greater than 100 mm, a water evacuation property deteriorates and movement of the land portion 58 becomes difficult so that effects of the present invention may not be sufficiently obtained. Note that when the shallow groove 51 has a curvature and so intervals of the shallow groove having the same extending direction are varied (width direction shallow groove 51b in the example as illustrated in FIG. 9), a width of the narrowest portion provides a basis.

Still further, in the tire according to the present embodiment, an auxiliary groove 59 is preferably provided at least in a part of the land portion 58 which is partitioned by the shallow groove 51 and the tread end. Thereby, an external appearance can be improved and a rigidity of the land portion 58 at a width direction outermost side in which the number of ground contacts is few is reduced so as to allow a grip performance to be improved. The auxiliary groove 59 can be suitably designed in accordance with tread patterns, but is preferably shallower than a maximum depth of the main groove 52 and deeper than a maximum depth of the shallow groove 51. Note that if a ratio of an area of the auxiliary groove 59 to an area of the land portion 58 defined by the shallow groove 51 and the tread end is larger, a rigidity of the land portion 58 is reduced more than necessary and a problem, such as cracking, may occur. Thus, in the tire of the present invention, a ratio of an area of the auxiliary groove 59 to an area of the land portion 58 is preferably approximately 5 to 40%, and the auxiliary groove 59 is preferably provided at such a pitch that two or more auxiliary grooves 59 are not included in the same ground contact surface and can be provided, for example, in every other, in every two and the like, of the land portion 58 defined by the shallow groove 51 and the tread end. Note that in the example as illustrated, the auxiliary groove 59 has a substantially rhombus shape and is closed in the land portion, but the shape thereof is not also particularly limited and other shapes, such as a circular shape, may be employed.

In the tire according to the present embodiment, the entirety of the shallow groove 51 may also open at the tread end, but as described above, at least a part thereof may only open at the tread end. In the example as illustrated, from among the shallow groove 51, the circumferential direction shallow groove 51a which extends from the first arrival side in the rotation direction toward the tire width direction inner side terminates at an intersection point with the width direction shallow groove 51b. In other words, it is configured that at a rotation direction first arrival side, the tread end and the circumferential direction shallow groove 51a are not to form a land portion having an acute tip. Such a configuration can prevent the formation of a small land portion having an acute tip in the vicinity of the tread end. Because such a small land portion may cause a problem, such as cracking, which is not preferable. Thus, as illustrated, the circumferential direction shallow groove 51a which extends toward the tire width direction inner side is preferably not provided in the vicinity of the tread end.

In the tire of the present invention, it is only important that the shallow grooves 11, 21, 31, 41, 51 respectively provided to the tread portions 10, 20, 30, 40, 50 satisfy the limitations as described above and no other particular limitations are included, and the other elements can employ a known structure. For example, as illustrated, when the main grooves 12, 22, 32, 42, 52 are provided, with respect to a width and a depth of the main grooves 12, 22, 32, 42, 52, any of those which have a width and a depth larger than those of the shallow grooves 11, 21, 31, 41, 51, respectively, may be employed. Further, also the elements other than the tread portions 10, 20, 30, 40, 50 are not also particularly limited, and a known structure can be employed. In FIG. 10, there is illustrated a schematic cross-sectional view in a width direction of the pneumatic tire for motorcycles according to a preferred embodiment of the present invention.

A tire 100 of the present invention as illustrated includes a tread portion 101, a pair of side wall portions 102 which are continuous with both sides of the tread portion 101, a pair of bead portions 103 which are respectively continuous with the pair of side wall portions 102, and a carcass 104 which is composed of at least one layer (one layer in the example as illustrated) of a carcass ply that reinforces such each portion over between the bead portions 103. In the example as illustrated, an end portion of the carcass 104 is fixed to the bead core 105 by being folded from tire inner side to an outer side, but may be also fixed by being sandwiched from both sides by a bead wire.

Moreover, in the tire as illustrated, a belt layer 106 is provided at a tire radial direction outer side of the carcass 104. A belt cord of the belt layer 106 is not also particularly limited and a known non-extensible and highly elastic cord can be employed, and those material that are composed of, for example, an organic fiber such as an aromatic polyamide (aramid, for example, manufactured by Du Pont; trade name: Kevlar), polyethylene naphthalate (PEN), polyethylene terephthalate (PET), rayon, or nylon, steel, glass fiber, carbon fiber or the like can be suitably selected to be employed. Such a belt may be also those that are composed of an inclined belt layer having two or more layers provided in such a manner that cord directions intersect with each other between layers, and may be also those that are composed of a spiral belt layer having one or more layers in which a cord direction is substantially a tire circumferential direction. In FIG. 10, at the tire radial direction outer side of the belt layer 106, a spiral belt layer 107 is provided.

The tire of the present invention can be applied to either of a front tire or a rear tire for motorcycles and can be also applied to a tire having either of a radial structure or a bias structure.

### EXAMPLES

Hereinafter, the present invention will be described further in detail using examples.

### (Example 1)

The pneumatic tire for motorcycles having tread patterns as illustrated in FIG. 1 was prepared with a tire size of 120/70ZR17M/C. It was designed that a depth of the shallow groove is 0.3 mm, a width of the shallow groove is 1.0 mm, an angle of the width direction shallow groove with respect to the tire width direction is 0°, and the groove was designed to be continuous in such a manner that the groove width and the groove depth are constant. A cross-sectional shape of the shallow groove is composed of a pair of groove walls which vertically extend from the surface of the tread portion and a groove bottom which connects the groove walls and is substantially parallel to the tread portion surface. It was designed that the space L1 of the shallow groove is 30 mm and L2 is 30 mm.

### (Comparative Example 1)

Except that the tread portion was not provided with a shallow groove, a tire of the comparative example was prepared in a manner similar to the tire of the example.

Using each tire obtained, in accordance with procedures below, a grip property and a traction property were evaluated. Results are indicated together in Table 1.

### (Grip Property)

The evaluation was performed by driving a vehicle to which each tire is fitted on a wet road surface. A grip performance was evaluated by feeling of a driver. Herein, evaluation of the tire of Comparative Example 1 was set to be 100, and that of the tire of Example 1 was indexed.

### (Traction Property)

A traction property was evaluated by feeling of a driver. Herein, evaluation of the tire of Comparative Example 1 was set to be 100, and that of the tire of Example 1 was indexed.

**(Table 1)**

| | Comparative Example 1 | Example 1 |
|---|---|---|
| Shallow groove width (mm) | - | 1.0 |
| Shallow groove depth (mm) | - | 0.3 |
| Angle of width direction shallow groove (°) | - | 0 |
| Groove interval L1/L2 (mm) | - | 30/30 |
| Grip property (index) | 100 | 110 |
| Traction property (index) | 100 | 110 |

From Table 1, it is found out that the tire of the present invention in which the tread portion is provided with the predetermined shallow groove is excellent in the grip property and the traction property.

### (Example 2-1)

The pneumatic tire for motorcycles having tread patterns as illustrated in FIG. 5 was prepared with a tire size of 120/70ZR17M/C. It was designed that a depth of the shallow groove is 0.3 mm, and a width of the shallow groove at the widest portion is 2.0 mm and at the narrowest portion is 1.0 mm. Further, it was designed that an angle of the shallow groove with respect to the tire width direction is orthogonal to a tire equator and intervals of the shallow groove is 24 mm. Patterns of the shallow groove were those of FIG. 6(a).

### (Example 2-2)

The pneumatic tire for motorcycles having tread patterns as illustrated in FIG. 5 was prepared with a tire size of 120/70ZR17M/C. It was designed that a depth of the shallow groove is 0.3 mm, and a width of the shallow groove at the widest portion is 2.0 mm and at the narrowest portion is 1.0 mm. Further, it was designed that an angle of the shallow groove with respect to the tire width direction is orthogonal to a tire equator and intervals of the shallow groove are 24 mm. Patterns of the shallow groove were those of FIG. 6(b).

### (Comparative Example 2)

Except that the tread portion was not provided with a shallow groove, a tire of the comparative example was prepared in a manner similar to the tire of the example.

Using each tire obtained, in accordance with procedures below, a grip property and a traction property were evaluated.

### (Grip Property)

The evaluation was performed by driving a vehicle to which each tire is fitted on a wet road surface. A grip performance was evaluated by feeling of a driver. Herein, evaluation of the tire of Comparative Example 2 was set to be 100, and that of the tires of Examples 2-1, 2-2 was indexed.

### (Traction Property)

A traction property was evaluated by feeling of a driver. Herein, evaluation of the tire of Comparative Example 2 was set to be 100, and that of the tires of Examples 2-1, 2-2 was indexed.

**(Table 2)**

| | Comparative Example 2 | Example 2-1 | Example 2-2 |
|---|---|---|---|
| Shallow groove shape | - | FIG. 6(a) | FIG. 6(b) |
| Shallow groove width (widest portion/narrowest portion: mm) | - | 2/1 | 2/1 |
| Shallow groove depth (mm) | - | 0.3 | 0.3 |
| Shallow groove angle (°) | - | 0 | 0 |
| Groove interval (mm) | - | 24 | 24 |
| Grip property (index) | 100 | 110 | 120 |
| Traction property (index) | 100 | 120 | 110 |

From Table 2, it is found out that the tire of the present invention in which the tread portion is provided with the predetermined shallow groove is excellent in the grip property and the traction property.

### (Example 3-1)

The pneumatic tire for motorcycles having tread patterns as illustrated in FIG. 7 was prepared with a tire size of 120/70ZR17M/C. It was designed that a depth of the shallow groove is 0.3 mm, and a width of the shallow groove is 1.0 mm. A total of a length of a border line of the center portion and the shoulder portion is that as indicated in Table 3. Moreover, the intervals L4, L5 were designed to be 30, 40 mm, respectively.

### (Example 3-2)

The pneumatic tire for motorcycles having tread patterns as illustrated in FIG. 8 was prepared with a tire size of 150/80B 16M/C. It was designed that a depth of the shallow groove is 0.3 mm, and a width of the shallow groove is 1.0 mm. A total of a length of a border line of the center portion and the shoulder portion is that as indicated in Table 3. Moreover, the interval of the shallow groove L6 was designed to be 40 mm.

### (Comparative Example 3)

Except that the tread portion was not provided with a shallow groove, a tire of Comparative Example 3 was prepared in a manner similar to the tire of the example.

Using each tire obtained, in accordance with procedures below, a grip property and a traction property were evaluated. Results are indicated together in Table 3.

### (Grip Property)

The evaluation was performed by driving a vehicle to which each tire is fitted on a wet road surface. A grip performance was evaluated by feeling of a driver. Herein, evaluation of the tire of Comparative Example 3 was set to be 100, and that of the tires of Examples 3-1, 3-2 was indexed.

### (Traction Property)

A traction property was evaluated by feeling of a driver. Herein, evaluation of the tire of Comparative Example 3 was set to be 100, and that of the tires of Examples 3-1, 3-2 was indexed.

**(Table 3)**

| | | Comparative Example 3 | Example 3-1 | Example 3-2 |
|---|---|---|---|---|
| Tread patterns | | - | FIG. 7 | FIG. 8 |
| Shallow groove width (mm) | | - | 1.0 | 1.0 |
| Shallow groove depth (mm) | | - | 0.3 | 0.3 |
| Angle of circumferential direction shallow groove (°) | | - | 0 | 0 |
| Angle of width direction shallow groove (°) | | - | 90 | 90 |
| Total of border line of circumferential direction shallow groove (mm) | Center region | - | 3800 | 0 |
| | Shoulder region | - | 0 | 3800 |
| Total of border line of width direction shallow groove (mm) | Center region | - | 200 | 3000 |
| | Shoulder region | - | 3000 | 200 |
| Grip property (index) | | 100 | 120 | 110 |
| Traction property (index) | | 100 | 110 | 120 |

From Table 3, it is found out that the tire of the present invention in which the tread portion is provided with the predetermined shallow groove is excellent in the grip property and the traction property.

### (Example 4-1, 4-2)

The pneumatic tire for motorcycles having tread patterns as illustrated in FIG. 9 was prepared with a tire size of 150/80B 16M/C. It was designed that a depth of the circumferential direction shallow groove 51a and the width direction shallow groove 51b are 0.3 mm and a width thereof is 1.0 mm. The intervals L8, L9 of the circumferential direction shallow groove were designed to be 24 mm. Moreover, a ratio of the auxiliary groove to the land portion was designed to be 12.5%. In Example 4-2, each condition was changed as indicated in below Table 4 and the tire was prepared.

### (Comparative Example 4)

Except that the shoulder region was not provided with a shallow groove, a tire of Comparative Example 4 was prepared in a manner similar to the tire of Example 4-1.

Using each tire obtained, in accordance with procedures below, a grip property was evaluated.

### (Grip Property)

The evaluation was performed by driving a vehicle to which each tire is fitted on a wet road surface. A grip performance was evaluated by feeling of a driver. Herein, evaluation of the tire of Comparative Example 4 was set to be 100, and that of the tires of Examples 4-1, 4-2 was indexed.

**(Table 4)**

| | Comparative Example 4 | Example 4-1 | Example 4-2 |
|---|---|---|---|
| Shallow groove depth (mm) | - | 0.3 | 0.3 |
| Shallow groove width (mm) | - | 1.0 | 1.0 |
| Shallow groove angle (°) | - | 50 | 50 |
| Groove interval (mm) | - | 24 | 24 |
| Presence of auxiliary groove | No | Yes | No |
| Grip property (index) | 100 | 105 | 103 |

From Table 4, it is found out that the tire of the present invention in which the shoulder region of the tread portion is provided with the predetermined shallow groove is excellent in a water evacuation property and the grip property.

### DESCRIPTION OF SYMBOLS

- 10, 20, 30, 40, 50: tread portion
- 11, 21, 31, 41, 51: shallow groove
- 12, 22, 32, 42, 52: main groove
- 14: border line
- 15: groove wall
- 16: groove bottom
- 17: protrusion portion
- 58: land portion
- 59: auxiliary groove
- 100: pneumatic tire for motorcycles
- 101: tread portion
- 102: side wall portion
- 103: bead portion
- 104: carcass
- 105: bead core
- 106: belt layer
- 107: spiral belt layer

## Claims

1. A pneumatic tire for motorcycles, comprising a tread portion (10, 20, 30, 40, 50) formed into a ring shape, wherein
the tread portion (10, 20, 30, 40, 50) is provided with a width direction shallow groove (11b, 21b, 31b, 41b, 51b) in which the width direction shallow groove (11b, 21b, 31b, 41b, 51b) is designed to extend
at least in a tire width direction, a length of the width direction shallow groove (11b, 21b, 31b, 41b, 51b) is greater than or equal to 50% of a width of a tire ground contact surface, and the width direction shallow groove (11b, 21b, 31b, 41b, 51b) is provided at intervals (L1, L2) which are shorter than a length of the tire ground contact surface,
wherein the width of the tire ground contact surface refers to a length of a portion that is the largest in a width direction in a ground contact surface under a normal load and a normal internal pressure, **characterized by** the width direction shallow groove (11b, 21b, 31b, 41b, 51b) having a width of 0.1 to 2.0 mm and a depth of 01. to 2.0 mm.

2. The pneumatic tire for motorcycles according to claim 1, wherein a width of the width direction shallow groove (11b, 21b, 31b, 41b, 51b) provided to the tread portion (10, 20, 30, 40, 50) is designed to change in an extending direction of the width direction shallow groove (11b, 21b, 31b, 41b, 51b).

3. The pneumatic tire for motorcycles according to claim 1 or 2, wherein
the tread portion (10, 20, 30, 40, 50) further includes a circumferential direction shallow groove (31a, 41a, 51a) designed to extend in a tire circumferential direction, and when a ground contact region of the tread portion (10, 20, 30, 40, 50) during straight running is a center region (Tc) and each of both outer sides of the center region (Tc) in a tire width direction is a shoulder region (Ts), and
in one of either the center region (Tc) and the shoulder region (Ts), one of either a total length of a border line (14) of the circumferential direction shallow groove (31a, 41a, 51a) and a total length of a border line (14) of the width direction shallow groove (11b, 21b, 31b, 41b, 51b) is greater than the other.

4. The pneumatic tire for motorcycles according to any one of claims 1 to 3, wherein when a ground contact region of the tread portion (10, 20, 30, 40, 50) during straight running is a center region (Tc) and each of both outer sides of the center region (Tc) in a tire width direction is a shoulder region (Ts), at least in the shoulder region (Ts), a plurality of at least two types of shallow grooves (11b, 21b, 31a, 31b, 41a, 41b, 51a, 51b) which extending directions differ from each other are provided, and
at least a part of the shallow grooves (11b, 21b, 31a, 31b, 41a, 41b, 51a, 51b) intersect with each other, and at least a part of the shallow grooves (11b, 21b, 31a, 31b, 41a, 41b, 51a, 51b) opens at a tread end.

5. The pneumatic tire for motorcycles according to claim 3 or 4, wherein a number of the shallow grooves (11b, 21b, 31a, 31b, 41a, 41b, 51a, 51b) is greater in the center region (Tc) than in the shoulder region (Ts) of the tread portion (10, 20, 30, 40, 50).

6. The pneumatic tire for motorcycles according to any one of claims 3 to 5, wherein a depth of the shallow grooves (11b, 21b, 31a, 31b, 41a, 41b, 51a, 51b) is greater in the center region (Tc) than in the shoulder region (Ts) of the tread portion (10, 20, 30, 40, 50).

7. The pneumatic tire for motorcycles according to any one of claims 3 to 6, wherein a width of the shallow grooves (11b, 21b, 31a, 31b, 41a, 41b, 51a, 51b) is greater in the center region (Tc) than in the shoulder region (Ts) of the tread portion (10, 20, 30, 40, 50).

8. The pneumatic tire for motorcycles according to claim 3 or 4, wherein a number of the shallow grooves (11b, 21b, 31a, 31b, 41a, 41b, 51a, 51b) is greater in the shoulder region (Ts) than in the center region (Tc) of the tread portion (10, 20, 30, 40, 50).

9. The pneumatic tire for motorcycles according to any one of claims 3 to 5, wherein a depth of the shallow grooves (11b, 21b, 31a, 31b, 41a, 41b, 51a, 51b) is greater in the shoulder region (Ts) than in the center region (Tc) of the tread portion (10, 20, 30, 40, 50).

10. The pneumatic tire for motorcycles according to any one of claims 3 to 6, wherein a width of the shallow grooves (11b, 21b, 31a, 31b, 41a, 41b, 51a, 51b) is greater in the shoulder region (Ts) than in the center region (Tc) of the tread portion (10, 20, 30, 40, 50).

## Patentansprüche

1. Luftreifen für Motorräder, der einen Laufflächenabschnitt (10, 20, 30, 40, 50) umfasst, der zu einer Ringgestalt geformt ist, wobei
der Laufflächenabschnitt (10, 20, 30, 40, 50) mit einer flachen Breitenrichtungsrille (11b, 21b, 31b, 41b, 51b) versehen ist, wobei die flache Breitenrichtungsrille (11b, 21b, 31b, 41b, 51b) so gestaltet ist, dass sie sich mindestens in einer Reifenbreitenrichtung erstreckt, wobei eine Länge der flachen Breitenrichtungsrille (11b, 21b, 31b, 41b, 51b) größer als oder gleich 50 % einer Breite einer Reifen-Bodenberührungsfläche ist und die flache Breitenrichtungsrille (11b, 21b, 31b, 41b, 51b) in Abständen (L1, L2) bereitgestellt wird, die kürzer sind als eine Länge der Reifen-Bodenberührungsfläche,
wobei sich die Breite der Reifen-Bodenberührungsfläche auf eine Länge eines Abschnitts bezieht, der in einer Bodenberührungsfläche unter einer normalen Last und einem normalen Innendruck der größte in einer Breitenrichtung ist, **dadurch gekennzeichnet, dass** die flachen Breitenrichtungsrillen (11b, 21b, 31b, 41b, 51b) eine Breite von 0,1 bis 2,0 mm und eine Tiefe von 0,1 bis 2,0 mm aufweisen.

2. Luftreifen für Motorräder nach Anspruch 1, wobei eine Breite der flachen Breitenrichtungsrille (11b, 21b, 31b, 41b, 51b), die an dem Laufflächenabschnitt (10, 20, 30, 40, 50) bereitgestellt wird, ausgebildet ist, um sich in einer Ausdehnungsrichtung der flachen Breitenrichtungsrille (11b, 21b, 31b, 41b, 51b) zu ändern.

3. Luftreifen für Motorräder nach Anspruch 1 oder 2, wobei
der Laufflächenabschnitt (10, 20, 30, 40, 50) ferner eine flache Umfangsrichtungsrille (31a, 41a, 51a) umfasst, die gebildet ist, um sich in einer Reifenumfangsrichtung zu erstrecken, und wenn ein Bodenberührungsbereich des Laufflächenabschnitts (10, 20, 30, 40, 50) während des Geradeauslaufs ein Mittenbereich (Tc) ist und jede der beiden äußeren Seiten des Mittenbereichs (Tc) in einer Reifenbreitenrichtung ein Schulterbereich (Ts) ist, und
in einem von dem Mittenbereich (Tc) und dem Schulterbereich (Ts) die eine von einer Gesamtlänge einer Begrenzungslinie (14) der flachen Umfangsrichtungsrille (31a, 41a, 51a) und einer Gesamtlänge einer Begrenzungslinie (14) der flachen Breitenrichtungsrille (11b, 21b, 31b, 41b, 51b) größer ist als die andere.

4. Luftreifen für Motorräder nach einem der Ansprüche 1 bis 3, wobei,
wenn ein Bodenberührungsbereich des Laufflächenabschnitts (10, 20, 30, 40, 50) während des Geradeauslaufs ein Mittenbereich (Tc) ist und jede der beiden äußeren Seiten des Mittenbereichs (Tc) in einer Reifenbreitenrichtung ein Schulterbereich (Ts) ist, mindestens in dem Schulterbereich (Ts) eine Mehrzahl von mindestens zwei Arten von flachen Rillen (11b, 21b, 31a, 31b, 41a, 41b, 51a, 51b), deren Ausdehnungsrichtungen sich voneinander unterscheiden, bereitgestellt werden und
sich mindestens ein Teil der flachen Rillen (11b, 21b, 31a, 31b, 41a, 41b, 51a, 51b) miteinander schneidet und sich mindestens ein Teil der flachen Rillen (11b, 21b, 31a, 31b, 41a, 41b, 51a, 51b) an einem Laufflächenende öffnet.

5. Luftreifen für Motorräder nach Anspruch 3 oder 4, wobei eine Anzahl der flachen Rillen (11b, 21b, 31a, 31b, 41a, 41b, 51a, 51b) in dem Mittenbereich (Tc) größer ist als in dem Schulterbereich (Ts) des Laufflächenabschnitts (10, 20, 30, 40, 50).

6. Luftreifen für Motorräder nach einem der Ansprüche 3 bis 5, wobei eine Tiefe der flachen Rillen (11b, 21b, 31a, 31b, 41a, 41b, 51a, 51b) in dem Mittenbereich (Tc) größer ist als in dem Schulterbereich (Ts) des Laufflächenabschnitts (10, 20, 30, 40, 50).

7. Luftreifen für Motorräder nach einem der Ansprüche 3 bis 6, wobei eine Breite der flachen Rillen (11b, 21b, 31a, 31b, 41a, 41b, 51a, 51b) in dem Mittenbereich (Tc) größer ist als in dem Schulterbereich (Ts) des Laufflächenabschnitts (10, 20, 30, 40, 50).

8. Luftreifen für Motorräder nach Anspruch 3 oder 4, wobei eine Anzahl der flachen Rillen (11b, 21b, 31a, 31b, 41a, 41b, 51a, 51b) in dem Schulterbereich (Ts) größer ist als in dem Mittenbereich (Tc) des Laufflächenabschnitts (10, 20, 30, 40, 50).

9. Luftreifen für Motorräder nach einem der Ansprüche 3 bis 5, wobei eine Tiefe der flachen Rillen (11b, 21b, 31a, 31b, 41a, 41b, 51a, 51b) in dem Schulterbereich (Ts) größer ist als in dem Mittenbereich (Tc) des Laufflächenabschnitts (10, 20, 30, 40, 50).

10. Luftreifen für Motorräder nach einem der Ansprüche 3 bis 6, wobei eine Breite der flachen Rillen (11b, 21b, 31a, 31b, 41a, 41b, 51a, 51b) in dem Schulterbereich (Ts) größer ist als in dem Mittenbereich (Tc) des Laufflächenabschnitts (10, 20, 30, 40, 50).

## Revendications

1. Bandage pneumatique pour motocycles, comprenant une partie de bande de roulement (10, 20, 30, 40, 50) formée en une forme annulaire, dans lequel :
la partie de bande de roulement (10, 20, 30, 40, 50) comporte une rainure peu profonde dans la direction de la largeur (11b, 21b, 31b, 41b, 51b), dans lequel la rainure peu profonde dans la direction de la largeur (11b, 21b, 31b, 41b, 51b) est configurée pour s'étendre au moins dans une direction de la largeur du bandage pneumatique, une longueur de la rainure peu profonde dans la direction de la largeur (11b, 21b, 31b, 41b, 51b) étant supérieure ou égale à 50% d'une largeur d'une surface de contact au sol du bandage pneumatique, et la rainure peu profonde dans la direction de la largeur (11b, 21b, 31b, 41b, 51b) étant agencée à des intervalles (L1, L2) plus courts qu'une longueur de la surface de contact au sol du bandage pneumatique ;
dans lequel la largeur de la surface de contact au sol du bandage pneumatique se réfère à une longueur d'une partie constituant la partie la plus grande dans une direction de la largeur dans une surface de contact au sol du bandage pneumatique en présence d'une charge normale et d'une pression interne normale, **caractérisé en ce que** les rainures peu profondes dans la direction de la largeur (11b, 21b, 31b, 41b, 51b) ont une largeur comprise entre 0,1 et 2,0 mm et une profondeur comprise entre 0,1 et 2,0 mm.

2. Bandage pneumatique pour motocycles selon la revendication 1, dans lequel une largeur de la rainure peu profonde dans la direction de la largeur (11b, 21b, 31b, 41b, 51b) formée sur la partie de bande de roulement (10, 20, 30, 40, 50) est configurée pour changer dans une direction d'extension de la rainure peu profonde dans la direction de la largeur (11b, 21b, 31b, 41b, 51b).

3. Bandage pneumatique pour motocycles selon les revendications 1 ou 2, dans lequel :
la partie de bande de roulement (10, 20, 30, 40, 50) inclut en outre une rainure peu profonde dans la direction circonférentielle (31a, 41a, 51a) configurée pour s'étendre dans une direction circonférentielle du bandage pneumatique, et lorsqu'une région de contact au sol de la partie de bande de roulement (10, 20, 30, 40, 50), au cours du roulement en ligne droite, constitue une région centrale (Tc), chacun des deux côtés externes de la région centrale (Tc), dans une direction de la largeur du bandage pneumatique constitue une région d'épaulement (Ts) ; et
dans l'une de la région centrale (Tc) et de la région d'épaulement (Ts), l'une d'une longueur totale d'une ligne de démarcation (14) de la rainure peu profonde dans la direction circonférentielle (31a, 41a, 51a) et d'une longueur totale d'une ligne de démarcation (14) de la rainure peu profonde dans la direction de la largeur (11b, 21b, 31b, 41b, 51b) est plus grande que l'autre.

4. Bandage pneumatique pour motocycles selon l'une quelconque des revendications 1 à 3, dans lequel :
lorsqu'une région de contact au sol de la partie de bande de roulement (10, 20, 30, 40, 50), au cours du roulement en ligne droite, constitue une région centrale (Tc) et lorsque chacun des deux côtés externes de la région centrale (Tc), dans une direction de la largeur du bandage pneumatique constituent une région d'épaulement (Ts), au moins dans la région d'épaulement (Ts), plusieurs d'au moins deux types de rainures peu profondes (11b, 21b, 31a, 31b, 41a, 41b, 51a, 51b) sont formés, s'étendant dans des directions différentes l'un de l'autre ; et
au moins une partie des rainures peu profondes (11b, 21b, 31a, 31b, 41a, 41b, 51a, 51b) se coupent avec les autres, et au moins une partie des rainures peu profondes (11b, 21b, 31a, 31b, 41a, 41b, 51a, 51b) étant ouverte au niveau d'une extrémité de la bande de roulement.

5. Bandage pneumatique pour motocycles selon les revendications 3 ou 4, dans lequel un nombre des rainures peu profondes (11b, 21b, 31a, 31b, 41a, 41b, 51a, 51b) est plus élevé dans la région centrale (Tc) que dans la région d'épaulement (Ts) de la partie de bande de roulement (10, 20, 30, 40, 50).

6. Bandage pneumatique pour motocycles selon l'une quelconque des revendications 3 à 5, dans lequel une profondeur des rainures peu profondes (11b, 21b, 31a, 31b, 41a, 41b, 51a, 51b) est plus grande dans la région centrale (Tc) que dans la région d'épaulement (Ts) de la partie de bande de roulement (10, 20, 30, 40, 50).

7. Bandage pneumatique pour motocycles selon l'une quelconque des revendications 3 à 6, dans lequel une largeur des rainures peu profondes (11b, 21b, 31a, 31b,41a, 41b, 51a, 51b) est plus grande dans la région centrale (Tc) que dans la région d'épaulement (Ts) de la partie de bande de roulement (10, 20, 30, 40, 50).

8. Bandage pneumatique pour motocycles selon les revendications 3 ou 4, dans lequel un nombre des rainures peu profondes (11b, 21b, 31a, 31b, 41a, 41b, 51a, 51b) est plus élevé dans la région d'épaulement (Ts) que dans la région centrale (Tc) de la partie de bande de roulement (10, 20, 30, 40, 50).

9. Bandage pneumatique pour motocycles selon l'une quelconque des revendications 3 à 5, dans lequel une profondeur des rainures peu profondes (11b, 21b, 31a, 31b, 41a, 41b, 51a, 51b) est plus grande dans la région d'épaulement (Ts) que dans la région centrale (Tc) de la partie de bande de roulement (10, 20, 30, 40, 50).

10. Bandage pneumatique pour motocycles selon l'une quelconque des revendications 3 à 6, dans lequel une largeur des rainures peu profondes (11b, 21b, 31a, 31b, 41a, 41b, 51a, 51b) est plus grande dans la région d'épaulement (Ts) que dans la région centrale (Tc) de la partie de bande de roulement (10, 20, 30, 40, 50).
